# EUROPEAN PATENT APPLICATION

(11) **EP 2 402 529 A2**
(43) Date of publication of application: **04.01.2012**
(21) Application number: 11171468.9
(22) Date of filing: 27.06.2011
(51) Int. Cl.: E04H 12/12, E04H 12/16

(54) **Tower with tensioning cables**

(30) Priority: 30.06.2010 US 826988
(71) Applicant: General Electric Company, Schenectady, NY 12345 (US)
(72) Inventor: Bagepalli, Bharat Sampathkumaran, Schenectady, NY 12345 (US); Sayers, Colwyn Mark Oscar, Greenville, SC 29615 (US)
(74) Representative: Bedford, Grant Richard

(57) **Abstract**

A tower (210), which may be used for a wind turbine (200), is provided. The tower (210) includes at least one concrete tower section (215) having a plurality of tensioning cables (280). The tensioning cables (280) are configured to induce a compressive force on the concrete tower section (215). The tensioning cables (280) are spaced from an exterior surface of the concrete tower section (215) by a substantially uniform distance.

## Description

This invention relates generally to towers. In particular, but not limited thereto, the present invention relates to wind turbine towers having tensioning cables.

Recently, wind turbines have received increased attention as environmentally safe and relatively inexpensive alternative energy sources. With this growing interest, considerable efforts have been made to develop wind turbines that are reliable and efficient.

Generally, a wind turbine includes a rotor having multiple blades. The rotor is mounted to a housing or nacelle, which is positioned on top of a truss or tubular tower. Utility grade wind turbines (i.e., wind turbines designed to provide electrical power to a utility grid) can have large rotors (e.g., 30 or more meters in diameter). Blades on these rotors transform wind energy into a rotational torque or force that drives one or more generators that may be rotationally coupled to the rotor through a gearbox. The gearbox steps up the inherently low rotational speed of the turbine rotor for the generator to efficiently convert mechanical energy to electrical energy, which is fed into a utility grid.

Several technical installations require a tower or a mast to which the installation is mounted. Non-limiting examples of such installations are wind turbines, antenna towers used in broadcasting or mobile telecommunication, pylons used in bridge work, or power poles. Typically, the tower is made of steel and must be connected to a foundation made of reinforced concrete. In these cases, the typical technical solution is to provide a large, solid reinforced concrete foundation at the bottom of the tower. In typical applications the tower foundation extends about 12 meters below the ground level, and can be about 18 meters or more in diameter.

In larger utility grade wind turbines (e.g., 2.5 MW or more) it is often desired to have towers with heights of 80 meters or more. The higher hub heights provided by larger towers enable the wind turbine's rotor to exist in higher mean wind speed areas, and this results in increased energy production. Increases in tower height invariably have lead to corresponding increases in the mass, length and diameter of the tower. However, it becomes difficult to construct and transport large wind turbine towers as the local transportation infrastructure (e.g., roads, bridges, vehicles, etc.) often impose limits on the length, weight and diameter of tower components.

According to one aspect of the present invention, a tower is provided. The tower includes at least one concrete tower section having a plurality of tensioning cables. The tensioning cables are configured to induce a compressive force on the concrete tower section. The tensioning cables are spaced from an exterior surface of the concrete tower section by a substantially uniform distance.

According to another aspect of the present invention, a wind turbine tower is provided. The tower includes at least one concrete tower section having a plurality of tensioning cables. The tensioning cables are configured to induce a compressive force on the concrete tower section. The tensioning cables are spaced from an exterior surface of the concrete tower section by a substantially uniform distance.

Various aspects and embodiments of the present invention will now be described in connection with the accompanying drawings, in which:
FIG. 1 illustrates a wind turbine to which the aspects of the present invention can be applied;
FIG. 2 illustrates a side view of a wind turbine and wind turbine tower, according to an aspect of the present invention;
FIG. 3 illustrates a side view of a concrete tower section, according to an aspect of the present invention;
FIG. 4 illustrates a cut-away, perspective view of a portion of a wind turbine tower, according to an aspect of the present invention;
FIG. 5 illustrates a side view of a wind turbine tower, according to an aspect of the present invention;
FIG. 6 illustrates a side view of a concrete tower section incorporating grooves in the outer wall thereof, according to an aspect of the present invention;
FIG. 7 illustrates a top view of a concrete tower section, according to an aspect of the present invention;
FIG. 8 illustrates a top view of a concrete tower section having a cover, according to an aspect of the present invention;
FIG. 9 illustrates a partial perspective view of a portion of a concrete tower section with the cover as shown in FIG. 8, according to an aspect of the present invention

Reference will now be made in detail to the various aspects of the invention, one or more examples of which are illustrated in the figures. Each example is provided by way of explanation of the invention, and is not meant as a limitation of the invention. For example, features illustrated or described as part of one aspect can be used on or in conjunction with other aspects to yield yet a further aspect. It is intended that the present invention includes such modifications and variations.

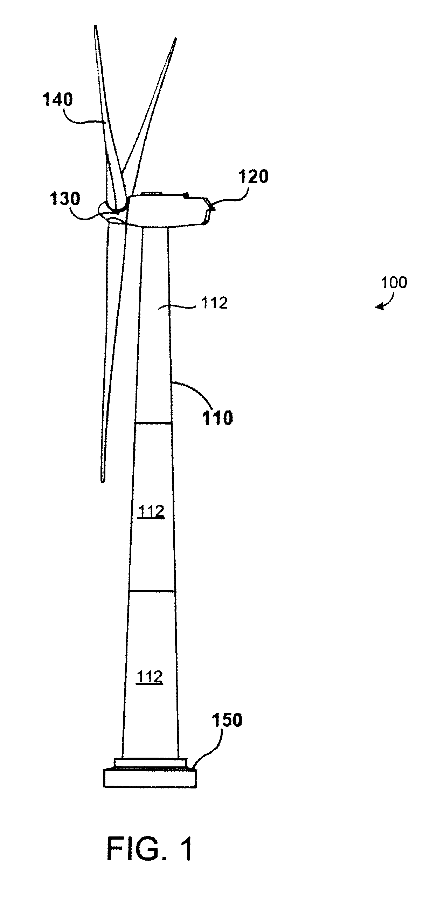

FIG. 1 shows a wind turbine to which the aspects of the present invention can be advantageously applied. However, it should be understood that the present invention is not limited or restricted to wind turbines but can also be applied to tower structures used in other technical fields. In particular, the various aspects of the present invention may also be applied to antenna towers used in broadcasting or mobile telecommunication or to pylons used in bridge work. Therefore, although the aspects of the invention will be exemplified with reference to a wind turbine, the scope of the present invention shall not be limited thereto.

The wind turbine 100 shown in FIG. 1 comprises a tower 110 bearing a nacelle 120 on its top end. A rotor including a rotor hub 130 and rotor blades 140 is attached to one side of the nacelle 120. The tower 110 is mounted on a foundation 150. The tower may be formed of rolled steel and have multiple stacked sections 112 (e.g., about three or four main sections). Alternatively, the tower 120 may be formed of a truss-like structure and/or may have a cylindrical or tapered profile. Typically, the tower foundation 150 is made of a solid mass of reinforced concrete.

It would be advantageous to increase tower height in order to capture more energy due to higher mean wind speeds. An aspect of the present invention provides a tower or tower section fabricated from concrete. A concrete base section can be used to elevate a conventional rolled-steel tower, or the entire tower can be formed of concrete. Concrete is defined as a mixture of aggregates and binder or any suitable masonry support. As one non-limiting example only, the aggregates may be sand and gravel or crushed stone, and the binder may be water and cement.

While concrete is strong in compression, it is weak in tension. Steel is strong under forces of tension, so combining the two elements results in the creation of very strong concrete components. In conventional reinforced concrete, the high tensile strength of steel is combined with concrete's great compressive strength to form a structural material that is strong in both compression and tension. The principle behind prestressed concrete is that compressive stresses induced by high-strength steel tendons in a concrete member before loads are applied will balance the tensile stresses imposed in the member during service.

Compressive stresses can be induced in prestressed concrete either by pretensioning or post-tensioning the steel reinforcement. In pretensioning, the steel is stretched before the concrete is placed. High-strength steel tendons or cables are placed between two abutments and stretched to a portion of their ultimate strength. Concrete is poured into molds around the tendons/cables and allowed to cure. Once the concrete reaches the required strength, the stretching forces are released. As the steel reacts to regain its original length, the tensile stresses are translated into a compressive stress in the concrete.

In post-tensioning, the steel or cable is stretched after the concrete hardens. Concrete is cast in the desired shape first. Once the concrete has hardened to the required strength, the steel tendons or cables are attached and stretched against the ends of the unit and anchored off externally, placing the concrete into compression. According to an aspect of the present invention, post-tensioned concrete is used for wind turbine towers or wind turbine tower sections.

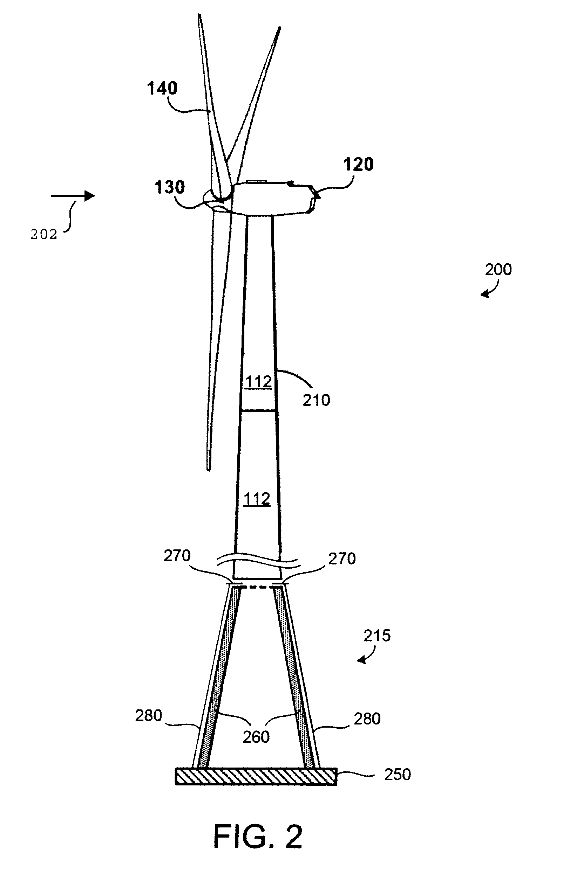

FIG. 2 illustrates a wind turbine tower, in a partially exploded view, according to an aspect of the present invention. The wind turbine 200 includes a tower 210 which may include one or more sections 112. The tower sections 112 may be formed of rolled steel. A concrete tower section 215 is located at the bottom of the tower and supports the upper sections 112. The concrete tower section 215 includes concrete walls 260 which may be formed in one or more sections and have a tapered (as shown) or cylindrical shape. Alternatively, the tower sections 210 and/or 215 can have any desired cross-section, such as but not limited to, oval, rectangular, polygonal, etc. One or more anchor plates 270 are secured to the top of the concrete walls 260. The anchor plates 270 can extend radially outward past the upper outer edge of walls 260. A plurality of tensioning cables 280 are secured at one end to the anchor plates 270, and at the other end to foundation 250.

The tensioning cables 280 are located circumferentially around and external to the concrete walls 260, and are positioned close to and at a substantially uniform distance from an outer or exterior surface of concrete walls 260. The term "substantially uniform" can be defined as having approximately the same, or having a slightly varying distance (e.g., a slight taper). In other words, the tensioning cables 280 can be parallel to or nearly parallel to the outer surface of concrete walls 260. As one non-limiting example only, the tensioning cables 280 may be spaced from an exterior surface of a top portion of concrete wall 260 by about two inches, whereas the cables 280 may be spaced from an exterior surface of a bottom portion of concrete wall 260 by about six inches. The cables 280 can be of the post-tensioned type, and they apply a compressive force to concrete walls 260. The use of external cables results in a larger moment arm and lower cable forces, and eventually, smaller cables would be required when compared to using the cables internal to the concrete segments. In other aspects of the invention, the tensioning cables 280 are positioned close to an exterior surface of concrete walls 260, but may be configured to have a slightly increasing or slightly decreasing distance from the exterior surface of concrete walls 260.

During operation of the wind turbine 200, wind flows in the direction indicated by arrow 202. The force of the wind creates a load on the wind turbine and tower. The up-wind side of the tower (i.e., the left side of the tower as shown in FIG. 2) would be under tension, while the down-wind side of the tower (i.e., the right side of the tower as shown in FIG. 2) would be under compression. As discussed previously, concrete performs very well under compression. However, concrete does not perform as well under tension. The tensioning cables 280 help to counteract the wind caused forces of tension on the tower section 215.

One advantage provided by various aspects of the present invention is the reduction of the effective moment-arm on tower section 215. By positioning the tensioning cables 280 close to and external to the exterior surface of concrete walls 280 the tower 210, 215 reduces its effective moment-arm to provide resistance to wind loads. This aspect of the invention moves the cables outside, but in close proximity to the tower walls. For example, a very small diameter tower having internal cables would need thicker walls and thicker cables to counteract the forces applied by the wind, when compared to a larger diameter tower having external cables. The larger diameter tower could be made with thinner concrete walls and have smaller diameter cables when compared to the very small diameter tower.

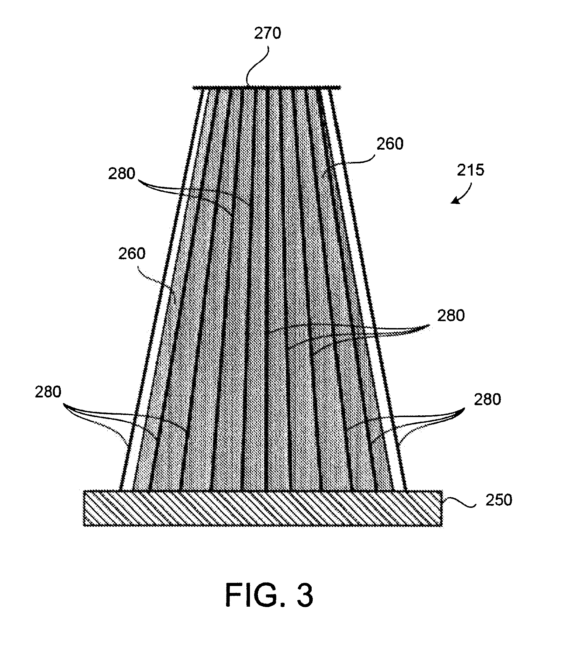

FIG. 3 illustrates a side view of concrete tower section 215. Tensioning cables 280 are affixed at one end to anchor plate(s) 270, and at the other end to foundation 250. The anchor plate 270 is attached (e.g., by bolts or fasteners) to the top of the concrete tower 260, and a portion of the anchor plate 270 protrudes outboard beyond the outer diameter of the top of concrete tower 260. The tensioning cables 280 are attached to the anchor plate 270 at the overhanging portion of the anchor plate. The anchor plate 270 can be made in multiple segments (e.g., three or four sections) that substantially cover the top of concrete walls 260. The anchor plate 270 may also have holes (not shown) through which the flange attachment bolts are embedded into the concrete wall 260. These can be used to attach the upper portion of the concrete wall 260 to conventional steel tube tower sections 112. At the bottom end, the cables are secured/attached into the foundation.

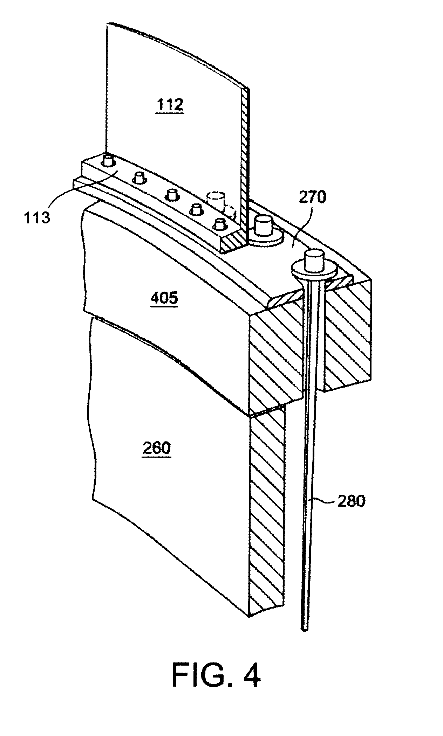

FIG. 4 illustrates a partial perspective view of a portion of a wind turbine tower according to an aspect of the present invention. An optional adapter section 405 may be used between a concrete tower section 260 and an upper tower section 112. In one example, the adapter section could be formed of concrete and/or steel, and the upper tower section 112 may be formed of rolled steel. The anchor plate 270 acts as an attachment point for tensioning cables 280 and the flange 113 of upper tower section 112. The flange can be attached to the anchor plate 270 with any suitable fastening arrangement (e.g., a nut, washer and bolt system). The tensioning cables 280 may also be attached to the anchor plate in a similar fashion and may have threaded ends designed to accept a washer and nut.

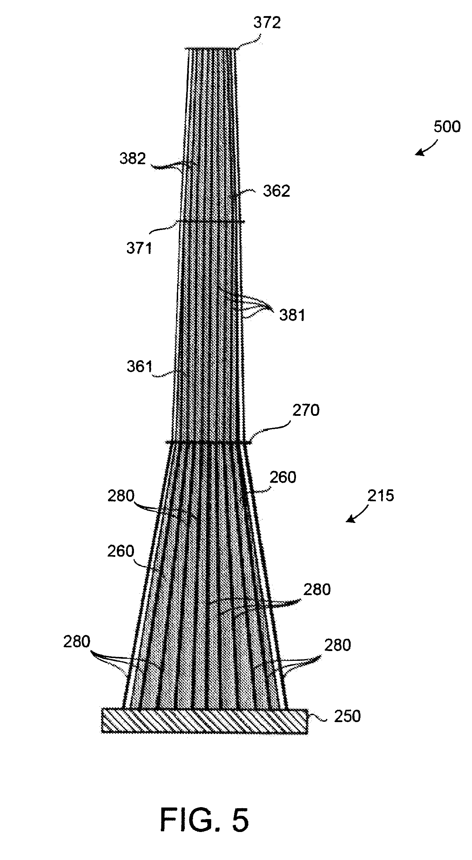

FIG. 5 illustrates a side view of a wind turbine tower 500 having multiple concrete tower sections 260, 361, 362. The second concrete tower section 361 is attached via anchor plate 270 or via a flange (not shown) to bottom section 260. Tensioning cables 381 are placed circumferentially around the exterior surface of concrete tower section 361, and are attached to anchor plates 270 and 371. The third concrete tower section 362 is attached via anchor plate 371 or via a flange (not shown) to second concrete tower section 361. Tensioning cables 382 are placed circumferentially around the exterior surface of concrete tower section 362, and are attached to anchor plate 371 and anchor plate 372. Alternatively, the individual tensioning cables 280, 381, 382 may be replaced by ling individual cables running from the foundation 250 to the top anchor plate 372. As discussed previously, upper concrete tower sections 361 and 362 could be replaced with one or more steel tower sections. The upper steel tower sections would not require the tensioning cables 381 and 382.

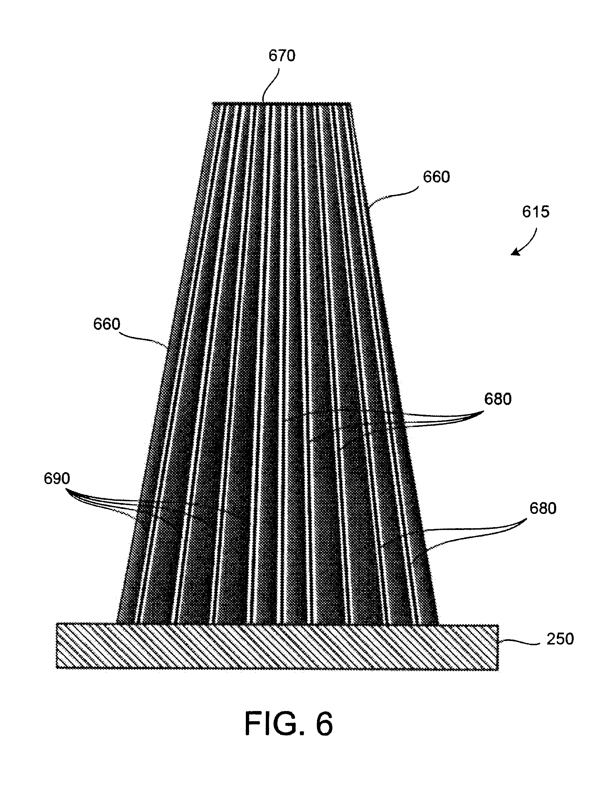

In another aspect of the present invention, FIG. 6 illustrates a side view of a concrete tower section 615 having external grooves 690 in which the tensioning cables 680 can reside. This configuration helps to center the cable loads in the body of the concrete wall 660, thus ensuring a more uniform compressive load in the concrete wall 660. This configuration may also reduce the occurrence of tensile loads in the concrete wall 660.

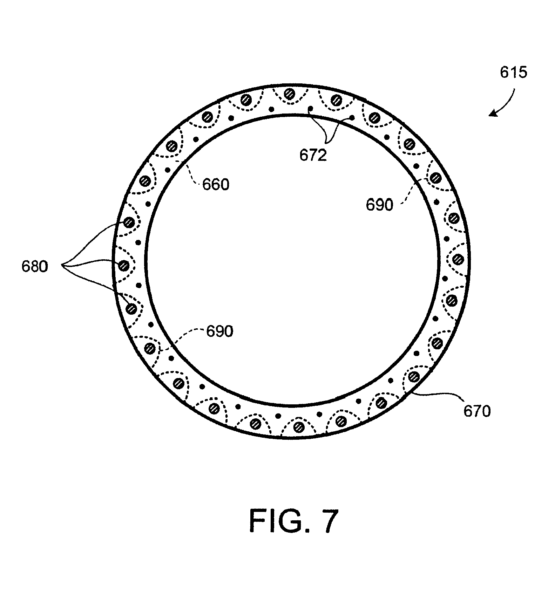

FIG. 7 illustrates a view from the top down of concrete tower section 615. The concrete wall 660 and the grooves 690 formed therein are shown in phantom. The anchor plate 670 can be configured to overhang the outer portions of concrete wall 660 or the anchor plate 670 may have its outer diameter aligned (as shown) or approximately flush with the outer diameter of wall 660. The anchor plate 670 can be attached to concrete wall 660 via bolts 672 or any other suitable fastener or fastener arrangement.

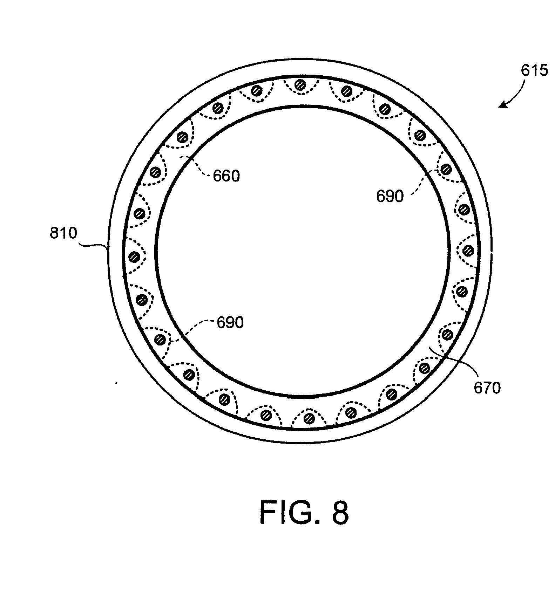

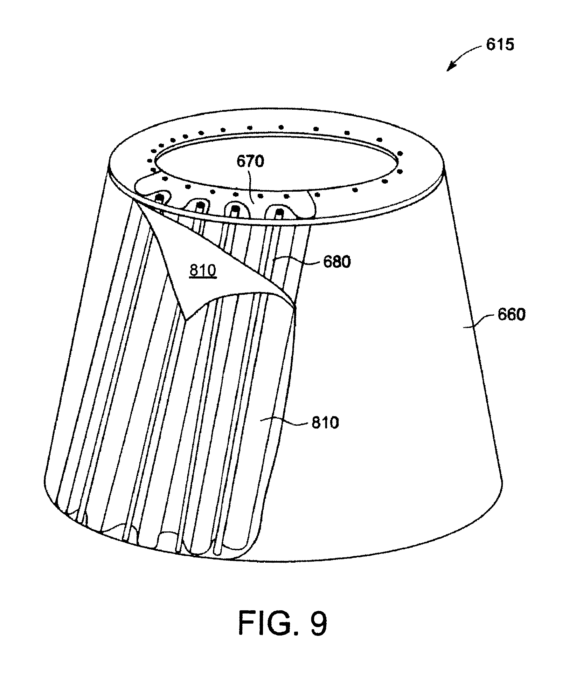

FIG. 8 illustrates a top down view of another aspect of the present invention. A removable, non-structural or semi-structural cover 810 can be incorporated on the outside of the concrete tower section 615, covering both the tensioning cables 680 and the concrete wall 660. The cover 810 can be made of plastic, composite, sheet metal or any other suitable fabric or material. The cover 810 may be comprised of one or more sections, and may have one or more seams. The seams could be arranged vertically, horizontally and/or any direction therebetween. The cover 810 can also provide protection (e.g., from the weather, vandalism, etc.) for the tensioning cables 680 and or the concrete wall 660. FIG. 9 illustrates a partial perspective view of the concrete tower section 615 during installation of cover 810.

The grooves 690 in concrete wall 660 provide several advantages, a few of which are, (1) protecting the external tensioning cables 680 (even more so with cover 810), (2) keeps the cables 680 away from view (i.e., reduces visual impact), (3) allows for easy maintenance of the cables 680 by facilitating external access, and (4) centers the compressive load on the concrete (due to the post-tensioned cables 680) in the body of the concrete wall 660.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A tower comprising:
   at least one concrete tower section having a plurality of tensioning cables, the plurality of tensioning cables configured to induce a compressive force on the at least one concrete tower section;
      wherein each of the plurality of tensioning cables are spaced from an exterior surface of the at least one concrete tower section by a substantially uniform distance.
2. The tower of clause 1, further comprising:
   at least one anchor plate attached to a top portion of the at least one concrete tower section;
   wherein each of the plurality of tensioning cables are attached to the at least one anchor plate.
3. The tower of any preceding clause, wherein each of the plurality of tensioning cables are attached to a foundation of the tower.
4. The tower of any preceding clause, further comprising:
   one or more upper tower sections;
   an adapter section located between the at least one concrete tower section and the one or more upper tower sections;
   at least one anchor plate attached to at least one of the one or more upper tower sections;
      wherein each of the plurality of tensioning cables are attached to the at least one anchor plate.
5. The tower of any preceding clause, wherein each of the plurality of tensioning cables are attached to a foundation of the tower.
6. The tower of any preceding clause, further comprising:
   at least one upper tower section attached to the at least one concrete tower section.
7. The tower of any preceding clause, wherein the at least one upper tower section is comprised of rolled steel.
8. The tower of any preceding clause, the at least one concrete tower section further comprising:
   a plurality of grooves disposed in an exterior surface of the at least one concrete tower section;
      wherein each of the plurality of tensioning cables are contained substantially within each of the plurality of grooves.
9. The tower of any preceding clause, further comprising:
   at least one cover configured to be attached to the tower;
      wherein the plurality of tensioning cables within the plurality of grooves are substantially covered by the at least one cover.
10. The tower of any preceding clause, wherein each of the plurality of tensioning cables are configured to be closer to a top exterior surface of the at least one concrete tower section than to a bottom exterior surface of the at least one concrete tower section.
11. A wind turbine tower, comprising:
   at least one concrete tower section having a plurality of tensioning cables, the plurality of tensioning cables configured to induce a compressive force on the at least one concrete tower section;
      wherein each of the plurality of tensioning cables are spaced from an exterior surface of the at least one concrete tower section by a substantially uniform distance.
12. The wind turbine tower of any preceding clause, further comprising:
   at least one anchor plate attached to a top portion of the at least one concrete tower section;
      wherein each of the plurality of tensioning cables are attached to the at least one anchor plate.
13. The wind turbine tower of any preceding clause, wherein each of the plurality of tensioning cables are also attached to a foundation of the wind turbine tower.
14. The wind turbine tower of any preceding clause, further comprising:
   one or more upper tower sections;
   an adapter section located between the at least one concrete tower section and the one or more upper tower sections;
   at least one anchor plate attached to at least one of the one or more upper tower sections;
      wherein each of the plurality of tensioning cables are attached to the at least one anchor plate.
15. The wind turbine tower of any preceding clause, wherein each of the plurality of tensioning cables are attached to a foundation of the wind turbine tower.
16. The wind turbine tower of any preceding clause, further comprising:
   at least one upper tower section attached to the at least one concrete tower section.
17. The wind turbine tower of any preceding clause, wherein at least one upper tower section is comprised of rolled steel.
18. The wind turbine tower of any preceding clause, the at least one concrete tower section further comprising:
   a plurality of grooves disposed in an exterior surface of the at least one concrete tower section;
      wherein each of the plurality of tensioning cables are contained substantially within the plurality of grooves.
19. The wind turbine tower of any preceding clause, further comprising:
   at least one cover configured to be attached to the wind turbine tower;
      wherein the plurality of tensioning cables within the plurality of grooves are covered by the at least one cover.
20. The wind turbine tower of any preceding clause, wherein each of the plurality of tensioning cables are configured to be closer to a top exterior surface of the at least one concrete tower section than to a bottom exterior surface of the at least one concrete tower section.

## Claims

1. A tower (210) comprising:
at least one concrete tower section (215) having a plurality of tensioning cables (280), the plurality of tensioning cables configured to induce a compressive force on the at least one concrete tower section;
wherein each of the plurality of tensioning cables are spaced from an exterior surface of the at least one concrete tower section by a substantially uniform distance.

2. The tower of claim 1, further comprising:
at least one anchor plate (270) attached to a top portion of the at least one concrete tower section;
wherein each of the plurality of tensioning cables (280) are attached to the at least one anchor plate.

3. The tower of any preceding claim, wherein each of the plurality of tensioning cables (280) are attached to a foundation (250) of the tower.

4. The tower of any preceding claim, further comprising:
one or more upper tower sections (112);
an adapter section (405), located between the at least one concrete tower section (215, 260) and the one or more upper tower sections (112);
at least one anchor plate (270) attached to at least one of the one or more upper tower sections;
wherein each of the plurality of tensioning cables (280) are attached to the at least one anchor plate.

5. The tower of any preceding claim, wherein each of the plurality of tensioning cables (280) are attached to a foundation (250) of the tower.

6. The tower of any preceding claim, further comprising:
at least one upper tower section (112) attached to the at least one concrete tower section.

7. The tower of claim 6, wherein the at least one upper tower section (112) is comprised of rolled steel.

8. The tower of any preceding claim, the at least one concrete tower section (615) further comprising:
a plurality of grooves (690) disposed in an exterior surface of the at least one concrete tower section (615);
wherein each of the plurality of tensioning cables (680) are contained substantially within each of the plurality of grooves.

9. The tower of claim 8, further comprising:
at least one cover (810) configured to be attached to the tower;
wherein the plurality of tensioning cables (680) within the plurality of grooves are substantially covered by the at least one cover.

10. The tower of any preceding claim, wherein each of the plurality of tensioning cables (680) are configured to be closer to a top exterior surface of the at least one concrete tower section (615) than to a bottom exterior surface of the at least one concrete tower section.
